# DEMANDE DE BREVET EUROPEEN

(11) **EP 4 506 589 A1**
(43) Date de publication de la demande: **12.02.2025**
(21) Numéro de dépôt: 24190338.4
(22) Date de dépôt: 23.07.2024
(51) Int. Cl.: F16H 3/083, B62M 6/55, B62M 11/06, B62M 25/08, F16D 11/12, F16D 23/12, F16H 3/089, F16H 63/30

(54) **DISPOSITIF DE CHANGEMENT DE VITESSE ET ENGIN DE MOBILITÉ ASSOCIÉ**

(30) Priorité: 11.08.2023 FR 2308662
(71) Demandeur: VALEO EMBRAYAGES, 80009 Amiens (FR)
(72) Inventeur: BOULET, Jérôme, 38070 St Quentin Fallavier (FR)
(74) Mandataire: Valeo Powertrain Systems

(57) **Abrégé**

L'invention concerne un dispositif de changement de vitesse (20) pour engin de mobilité (1) comportant :
- un arbre de sélection (40) dans lequel sont disposées une navette (41) et une vis sans fin (21),
- un actionneur de changement de vitesse (70) agencé pour déplacer la navette (41) le long de la vis sans fin (21) entre au moins deux positions, et engager un rapport sélectionné,
- au moins deux cliquets (42) disposés au niveau de l'arbre de sélection (40),. la navette permettant le soulèvement d'un cliquet pour enclencher le rapport sélectionné, chaque cliquet ayant une première partie (421) insérée dans l'arbre (40) et une deuxième partie (422),
- un système de blocage radiale (44), formé d'une seule pièce, pour maintenir l'ensemble des cliquets (42), en place sur l'arbre de sélection (40),
caractérisé en ce que le système de blocage est disposé au niveau de la première partie (421) du cliquet (42).

## Description

La présente invention concerne le domaine des dispositifs de changement de vitesses, et plus particulièrement un dispositif de changement de vitesse pour un engin de mobilité utilisant au moins une propulsion électrique, et par exemple un vélo à assistance électrique.

Lors du fonctionnement d'un engin de mobilité, une force motrice est transmise aux roues par l'intermédiaire d'un système de manivelle tournant autour d'un axe de pédalier qui entraîne la roue arrière généralement par une chaîne.

Il est déjà connu dans l'art antérieur des boites de vitesses pour engin de mobilité Par exemple, la demande de brevet FR2975367 A1 divulgue un dispositif de changement de vitesses pour vélos comportant une boîte de vitesses à engrenages et une navette coulissante pour effectuer la sélection du rapport de vitesse. La navette agit sur un système à cliquets, via une bille ou un ressort, qui vont à leur tour agir sur des pignons d'entrée pour enclencher la vitesse choisie. Les cliquets sont maintenus par un système de blocage. Un inconvénient de ces systèmes provient de leur fragilité liée à la force nécessaire pour maintenir les cliquets en place.

La présente invention a donc pour objet de pallier un ou plusieurs des inconvénients des dispositifs de l'art antérieur en proposant un dispositif de changement de vitesse amélioré. Pour cela la présente invention propose un dispositif de changement de vitesse pour engin de mobilité comportant :
- un arbre de sélection dans lequel sont disposées une navette et une vis sans fin,
- un actionneur de changement de vitesse agencé pour déplacer la navette le long de la vis sans fin entre au moins deux positions, et engager un rapport sélectionné,
- au moins deux cliquets disposés au niveau de l'arbre de sélection, la navette permettant le soulèvement d'un cliquet pour enclencher le rapport sélectionné, chaque cliquet ayant une première partie insérée dans l'arbre et une deuxième partie,
- un système de blocage, formé d'une seule pièce, pour maintenir l'ensemble des cliquets, en place sur l'arbre de sélection, le système de blocage étant disposé au niveau de la première partie du cliquet.

Selon un mode de réalisation de l'invention, le système de blocage est disposé dans une rainure.

Selon un mode de réalisation de l'invention, la rainure est formée dans l'arbre au niveau de de la première partie du cliquet.

Selon un mode de réalisation de l'invention, la rainure est longitudinale, et parallèle à l'axe de l'arbre, formée dans l'arbre de sélection de façon à former un angle supérieur à 0 degré avec la première partie du cliquet.

Selon un mode de réalisation de l'invention, le système de blocage est formé d'une partie plane longitudinale à partir de laquelle s'étendent au moins deux languettes, chacune des languettes étant positionnées au-dessus d'un cliquet.

Selon un mode de réalisation de l'invention, les languettes sont formées à partir d'un premier bord, parallèle à l'axe du système de blocage, de la partie plane et orientées perpendiculairement par rapport à l'axe du système de blocage.

Selon un mode de réalisation de l'invention, la partie plane est insérée, via un deuxième bord opposé à celui où sont situées les languettes, dans la rainure longitudinale formée dans l'arbre de sélection.

L'invention concerne également un engin de mobilité, notamment engin de mobilité à assistance électrique, comportant un dispositif de changement de vitesse selon l'invention. Selon un mode de réalisation de l'invention, l'engin est un vélo à assistance électrique

D'autres buts, caractéristiques et avantages de l'invention seront mieux compris et apparaîtront plus clairement à la lecture de la description faite, ci-après, en se référant aux figures annexées, données à titre d'exemple et dans lesquelles:
- la [Fig. 1] est une vue d'un engin de mobilité selon un des aspects de l'invention,
- la [Fig. 2] illustre l'ensemble de transmission de l'engin de mobilité de la Figure 1,
- les [Fig. 3a et b] illustre une vue en coupe d'une partie d l'ensemble de transmission a) et de l'ensemble de transmission b),
- la [Fig. 4] est une vue en coupe d'un dispositif de changement de vitesse selon l'invention,
- la [Fig. 5] est une représentation schématique vue en coupe d'une partie du dispositif de changement de vitesse avec du système de blocage selon l'invention, en pointillés selon une deuxième position,
- la [Fig. 6] est une représentation schématique vue en coupe d'un élément de blocage du cliquet selon l'invention,
- la [Fig. 7] est une représentation schématique vue en coupe d'un cliquet selon une variante l'invention,
- la [Fig. 8] est une représentation schématique vue en coupe d'un cliquet selon une autre variante l'invention,
- la [Fig. 9] est une vue de l'intérieur du boitier intégrant une partie de l'ensemble de transmission selon l'invention.

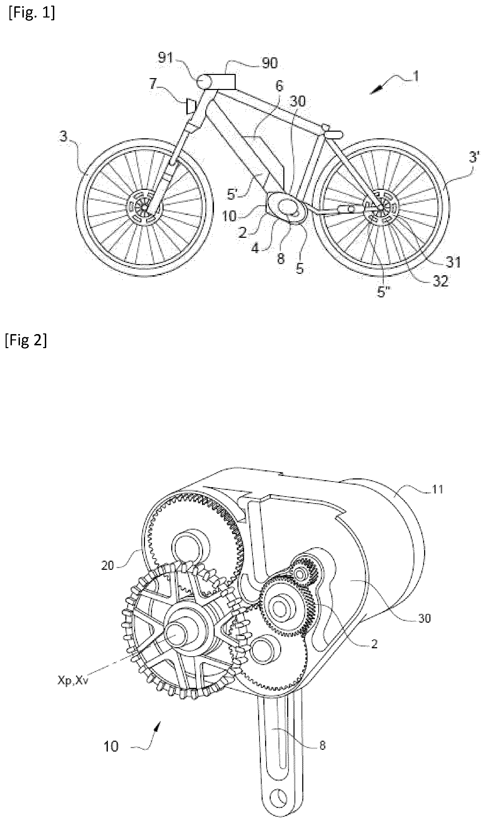

La [Fig. 1] illustre un engin de mobilité 1 selon un des aspects de l'invention. L'engin 1 est ici un vélo à assistance électrique comportant un moteur électrique 2. Le moteur électrique 2 est agencé pour assurer une partie de la propulsion de l'engin.

Le vélo comporte au moins deux roues 3, 3 'auxquelles est fournie une force motrice, par l'intermédiaire de deux pédales tournant autour d'un axe de pédalier d'axe Xp qui entraîne la roue arrière par exemple par une chaîne, ou tout autre moyen de transmission lors de son utilisation.

L'engin 1 comporte également une unité de pilotage 4 ainsi que plusieurs capteurs 5, 5', 5", situés par exemple au niveau du pédalier, sur le cadre du vélo ou au niveau d'une roue 3, 3'. L'engin 1 ici représenté comporte également un dispositif de stockage d'énergie sous forme d'une batterie 6, un système d'éclairage 7, un pédalier 8 d'axe Xp, un système de localisation et/ou navigation 90 ainsi qu'un système interface homme-machine 91 comportant notamment un écran tactile apte à afficher des informations pour et/ou prendre en compte les demandes dudit utilisateur. Le système interface homme-machine 91 est en particulier relié au système de localisation 90 et sert d'interface de navigation. L'invention n'est pas limitée à un système interface homme-machine particulier, et peut comporter tout système connu de l'homme du métier.

Les roues 3, 3' sont munies d'un système de freinage 31, comportant notamment des freins à disque 32.

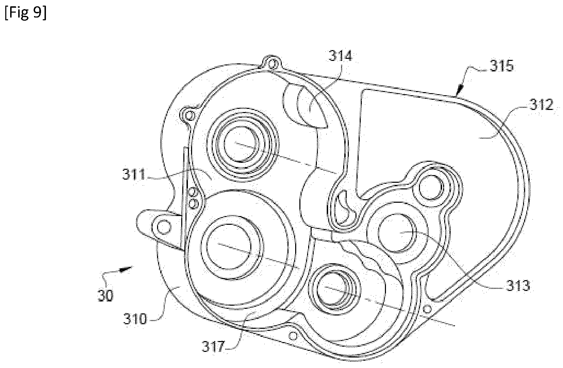

L'engin 1 comporte un ensemble de transmission 10 illustré [Fig. 2]. L'ensemble de transmission 10 comporte un dispositif de changement de vitesse 20 selon l'invention et le moteur électrique 2 pour fournir une partie de la puissance pour la propulsion de l'engin 1. Selon un mode de réalisation de l'invention, l'ensemble de transmission 10 est au moins en partie logé dans un boîtier 30 (illustré [Fig. 9]) ici positionné au niveau du pédalier 8 dont l'axe Xp est confondu avec l'axe de sortie Xᵥ du dispositif de changement de vitesse 20.

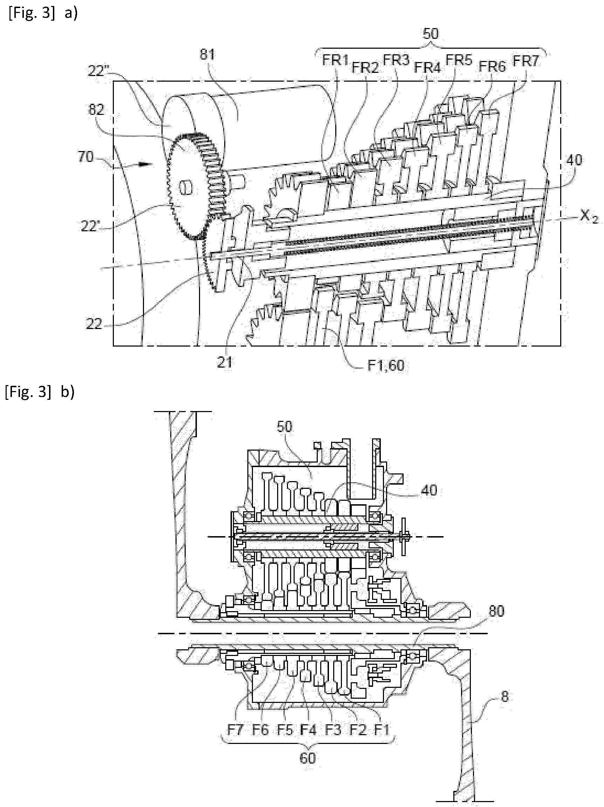

Selon un mode de réalisation de l'invention, le dispositif de changement de vitesse 20 illustré [Fig. 3 a et b] comporte au moins 2 rapports, et par exemple 7 rapports entre un premier rapport dit rapport n°1 et un rapport supérieur dit rapport n°7.

Selon un mode de réalisation de l'invention, le dispositif de changement de vitesse 20 comporte une série de trois ou sept pignons de sortie 60 d'axe X, de référence F₁ à F₇, solidaires en rotation d'un arbre creux 80 et une série de trois ou sept pignons d'entrée 50, de référence Fr₁ à Fr₇ agencés pour tourner librement autour de l'arbre de sélection 40.

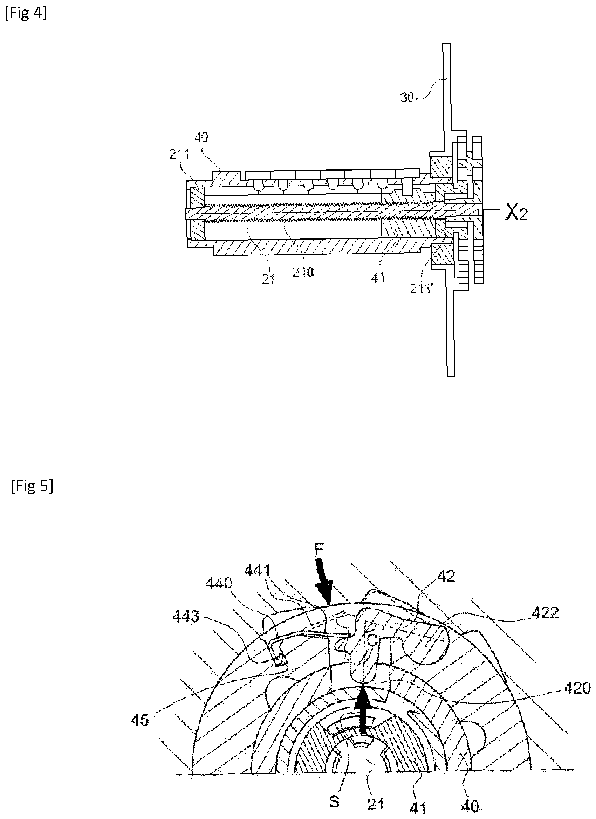

Selon un mode de réalisation de l'invention, l'arbre de sélection 40 illustré [Fig. 3] et [Fig. 4] loge une navette 41 entourant une vis sans fin 21 du dispositif de changement de vitesse 20. Selon une variante de l'invention, le dispositif de changement de vitesse 20 comporte un train épicycloïdal.

L'engin 1 selon l'invention, comporte un actionneur de changement de vitesse 70 agencé pour déplacer la navette 41 le long de la vis sans fin 21 par une liaison cinématique hélicoïdale, entre au moins 2 positions et par exemple entre 7 positions de P₁ à P₇ et engager un rapport sélectionné.

Selon un mode de réalisation de l'invention, l'arbre de sélection 40 est creux.

Selon un mode de réalisation de l'invention, l'actionneur de changement de vitesse 70 comporte des moyens électriques de déplacement de la navette 41, sous forme d'un motoréducteur. Celui-ci comporte un moteur 81 et un réducteur 82.

Selon un mode de réalisation de l'invention, le motoréducteur comporte également un pignon 22 sur l'axe de la vis sans fin 21, un pignon 22' intermédiaire et un pignon 22‴ sur l'axe Xm du moteur 81. Les dentures des pignon 22, 22', 22" peuvent être droites comme illustré ou hélicoïdales dans une variante non illustrée.

Le guidage en rotation de la vis sans fin 21 est par exemple assuré à l'aide de roulements à chacune de ses extrémités.

Selon un mode de réalisation de l'invention, la navette 41 est configurée pour, lors de son déplacement, se positionner sous le pignon du rapport sélectionné, et enclencher ce rapport. Selon un mode de réalisation de l'invention, la navette 41 est configurée comme celle décrite dans la demande FR2975367.

Selon un mode de réalisation de l'invention, le motoréducteur comporte des pignons d'axes parallèles comme illustré [Fig. 3] ou d'axes perpendiculaires.

Selon un mode de réalisation de l'invention, l'actionneur de changement de vitesse 70 comporte un engrenage conique, droit ou hélicoïdal et/ou avec un étage ou plus.

Selon une variante de réalisation de l'invention, l'actionneur de changement de vitesse 70 a une courroie ou une chaîne ou un cardan.

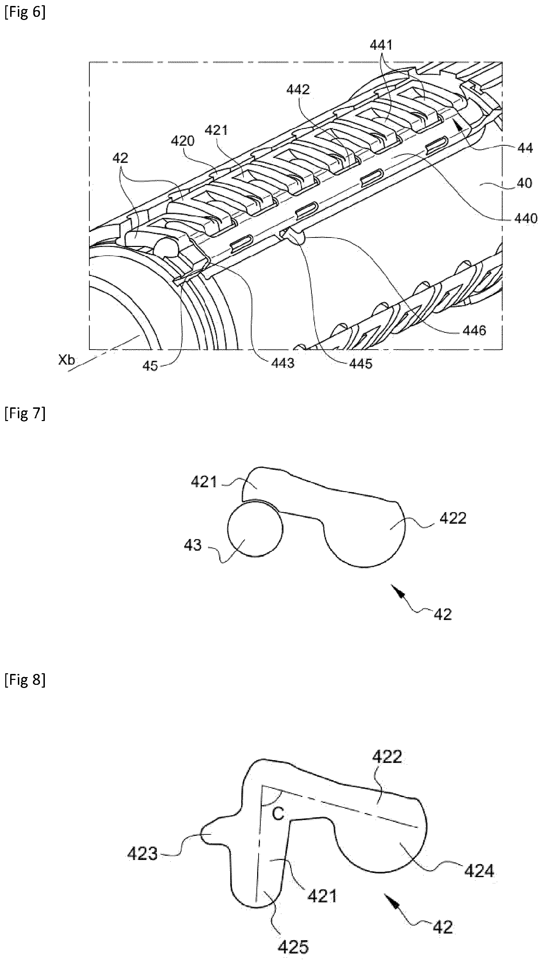

Selon un mode de réalisation de l'invention, illustré [Fig. 5] et [Fig. 6], le dispositif de changement de vitesse 20 comporte au niveau de l'arbre de sélection 40 au moins deux cliquets 42 et par exemple pour un engin 1 à 7 vitesses, comporte sept cliquets 42 ou trois pour engin à 3 vitesses.

Selon un mode de réalisation de l'invention, le dispositif de changement de vitesse 20 comporte une série de trois ou sept cliquets disposés les uns à la suite des autres selon l'axe longitudinale X2 de l'arbre de sélection 40.

Selon un mode de réalisation de l'invention, le dispositif de changement de vitesse 20 comporte au moins une série d'au moins trois ou au moins sept cliquets disposés les uns à la suite des autres selon l'axe longitudinale X2 de l'arbre de sélection 40.

Selon un mode de réalisation de l'invention, le dispositif de changement de vitesse 20 comporte trois séries d'au moins trois ou au moins sept cliquets disposés les uns à la suite des autres selon l'axe longitudinale X2 de l'arbre de sélection 40. Les séries étant disposées à 120 degrés l'une de l'autre autour de l'arbre de sélection 40.

Selon un mode de réalisation de l'invention, le dispositif de changement de vitesse 20 comporte deux séries d'au moins trois ou au moins sept cliquets disposés les uns à la suite des autres selon l'axe longitudinale X2 de l'arbre de sélection 40. Les séries étant disposées à 180 degrés l'une de l'autre autour de l'arbre de sélection 40.

Selon un mode de réalisation de l'invention, les cliquets 42 ont une forme configurée pour coopérer avec les pignons d'entrée Fri. Les cliquets 42 sont disposés dans des évidements 420 formés sur l'arbre de sélection 40.

Selon un mode de réalisation de l'invention, chaque cliquet 42 est associé à un ressort disposé dans un perçage 430 de l'arbre intérieur, dépassant à l'intérieur de l'arbre intérieur, placée sous chaque cliquet 42 de façon à pouvoir le soulever via la navette 41.

Selon une variante de l'invention, chaque cliquet 42 est associé à au moins un dispositif de soulèvement, et par exemple une bille 43, visible [Fig. 7] disposée dans un perçage 430 de l'arbre intérieur, dépassant à l'intérieur de l'arbre intérieur, placée sous chaque cliquet 42 de façon à pouvoir le soulever via la navette 41.

Selon une deuxième variante de l'invention, illustré [Fig. 8], chaque cliquet 42 est formé en une seule pièce comportant deux parties 421, 422 disposées l'une par rapport à l'autre de façon à former un angle C compris entre 60 et 120 degrés. Ce cliquet en une seule pièce évite l'utilisation de plusieurs pièces.

Selon un mode de réalisation de l'invention, les deux parties ont une forme tubulaire ou carrée ou tout autre forme compatible avec leur fonction. Une première partie 421 de forme allongée est disposée dans l'évidemment 420, perpendiculairement à l'axe X₂ de l'arbre de sélection, lorsque le rapport n'est pas enclenché. Une deuxième partie est disposée selon l'angle C de façon à avoir une face orientée vers l'extérieur de l'arbre 40 de sélection. L'extérieur de l'arbre étant la face opposée à celle en contact avec la vis 21 sans fin et située à l'intérieur.

Selon un mode de réalisation de l'invention, la deuxième partie 422 comporte une extrémité 424 agrandie qui lui permet d'être bloquée dans l'évidement. L'extrémité 424 agrandie à une forme arrondie pour permettre la rotation du cliquet 42 dans l'évidement.

L'extrémité libre 425 de la première partie 421 orientée vers l'intérieur de l'arbre de sélection 40, est positionnée dans l'évidement de façon à dépasser vers l'intérieur de l'arbre de sélection 40.

Selon une variante de cette deuxième variante, la première partie 421 du cliquet 42 comporte une butée 423 sur laquelle prend appuie un élément de blocage. La butée est disposée à l'opposé de la deuxième partie 422 dans le même plan radial.

Un tel cliquet selon l'invention, assure ainsi deux fonctions en une seule pièce, la fonction de soulèvement via la navette et la fonction d'enclenchement du rapport sélectionner via le cliquet.

Lorsque la vitesse est sélectionnée, la navette 41 est positionnée sous le pignon d'entrée Fr_{I} correspondant au rapport i sélectionné, qui est alors bloqué en rotation par un des cliquets 42, et engrène avec le pignon correspondant de sortie.

Dans le cadre de l'invention, pour maintenir les cliquets 42 en place dans leur logement 420, le système de changement de vitesse comporte au moins un système de blocage radiale 44 formé d'une seule pièce. C'est-à-dire un système 44 qui maintient les cliquets 42 plaqués dans leur logement, tout en leur permettant de se soulever via la bille 43 et la navette 41. Le système de blocage radiale 44 est formé d'une seule pièce. Cela facilite son montage, sa fabrication et limite les coûts.

Selon un mode de réalisation de l'invention, le système de blocage 44 comporte une partie plane longitudinale 440.

Selon un mode de réalisation de l'invention, le système 44 comporte au moins deux languettes 441, et par exemple trois ou sept languettes 441 dans le cas d'un engin à trois ou sept vitesses. Selon un mode de réalisation de l'invention, les languettes 441 sont formées à partir d'un premier bord 442, parallèle à l'axe Xb du système de blocage 44, de la partie plane 440 et orientées perpendiculairement par rapport à l'axe Xb du système de blocage 44. Le système de blocage 44 en rotation forme ainsi un peigne aux dents aplaties et écartées.

Selon un mode de réalisation de l'invention, la partie plane 440 est insérée, via un deuxième bord 443 opposé à celui 442 où sont situées les languettes 441, dans une rainure 45 longitudinale, et parallèle à l'axe de l'arbre, formée dans l'arbre de sélection 40.

Selon un mode de réalisation de l'invention, ce deuxième bord 443 est replié en direction de l'arbre 40 pour s'insérer dans la rainure 45.

Le système de blocage 44 est disposé sur l'arbre de sélection 40 de façon à ce que chaque languette 441 soit positionnée sur un cliquet 42.

Selon un mode de réalisation de l'invention, chaque cliquet 42 comporte un évidement 421 dont la forme est complémentaire à celle de la languette 42 de façon à ce que la languette 42 soit logée dans l'évidement 421, et ne bouge pas lors du blocage du cliquet.

Selon un mode de réalisation de l'invention de la deuxième variante, l'extrémité libre 441, c'est-à-dire celle qui n'est pas insérée dans la rainure, prend appuie sur la butée 423 du cliquet 42 de façon à le maintenir plaqué dans l'évidement vers l'intérieur de l'arbre de sélection 40, tout en permettant son soulèvement via la navette 41. Plus précisément, la force de rappel F du système de blocage 44 s'exerce vers l'intérieur de l'arbre de sélection 40.

Selon un mode de réalisation de l'invention, le dispositif de blocage 44 en rotation comporte une languette de positionnement 444. Cette languette de positionnement 444 est disposée sur le deuxième bord 443 inséré dans la rainure 45. Cette languette 444 coopère avec un logement supplémentaire 445 de forme complémentaire à celle de la languette de positionnement 444 formé dans l'arbre de sélection 40. Cette languette de positionnement 4444 permet aux languettes 441 du dispositif d'être centrées au-dessus des cliquets 42.

Le système de blocage 44 en rotation exerce ainsi sur chaque cliquet 44 une pression, ou force de plaquage, suffisante pour bloquer le cliquet 42 dans le logement 421 tout en lui permettant d'être soulevé par la navette 41.

Dans le cadre de l'invention, la rainure 45 visible [Fig. 5] est formée dans l'arbre 40 au niveau de la première partie 421 du cliquet 42. C'est-à-dire du côté de la partie libre du cliquet qui se s soulève sous l'action de la navette. Le système de 44 est ainsi inséré à ce niveau là par son premier bord 443.

Cela permet de limiter la force exercée sur l'élément de blocage et limite ainsi le risque de détérioration.

Selon un mode de réalisation de l'invention, l'insertion est réalisée dans la rainure 45 longitudinale, et parallèle à l'axe de l'arbre, formée dans l'arbre de sélection 40 de façon à former un angle supérieur à 0 degré avec la première partie 421 du cliquet 42 selon un plan radial.

Selon un mode de réalisation de l 'invention, le système de changement de vitesse comporte au moins deux ou trois système de blocage 44 en rotation disposés de façon à bloquer deux ou trois séries de cliquets.

La navette 41 permet de sélectionner le rapport choisi qui va enclencher un pignon d'entrée Fri via un cliquet 42 et être bloqué en rotation grâce au système de blocage en rotation 44. Le pignon d'entrée Fri engrène ensuite avec un pignon de sortie Fi.

Si l'engin 1 roule dans un rapport i, sans en changer, la vis sans fin 21 ne tourne pas.

Lors d'un changement de rapport de vitesse la vis sans fin 21 est entraînée en rotation par l'actionneur de changement de vitesse 70 provoquant le mouvement axial de l'écrou 210 de la vis 21 qui entraine la navette 41 et permet ainsi le passage de rapport. Grâce à la liaison pivot ainsi réalisée le mouvement de rotation de la vis sans fin 21 est transformé en mouvement de translation de la navette 41.

Selon un mode de réalisation de l'invention, une butée 211, 211' limite à chaque extrémité le déplacement de la navette 41. Selon un autre mode de réalisation de l'invention, le déplacement de la navette est contrôlé par un capteur de position.

Selon un mode de réalisation non illustré, la navette 41 est apte à prendre une position dite position neutre P0 pour laquelle aucun rapport de vitesse n'est engagé.

La [Fig. 9] illustre plus en détail le boîtier 30 de l'engin de mobilité 1de la figure 1.

Le boitier 30 comporte un carter 310 délimitant un premier logement 311 agencé pour loger les engrenages du dispositif changement de vitesse 20. Le carter 310 délimite également au moins deux deuxièmes logements 312, 313, 314, 315, distincts les uns des autres. L'ensemble de ces logements est agencé pour loger respectivement le moteur électrique 2, le réducteur 11, l'actionneur de changement de vitesse 70 et l'unité de pilotage 4 de l'engin de mobilité. Selon un mode de réalisation de l'invention, au moins un deuxième logement est étanche, et par exemple celui agencé pour contenir l'unité de pilotage 4.

Selon un mode de réalisation de l'invention, le carter 310 logeant le dispositif changement de vitesse 20 est fermé par deux flasques latéraux 317. Le premier logement 311 présente deux ouvertures en regard dans les flasques latéraux 317 pour accueillir l'axe de pédalier de l'engin de mobilité1.

La portée de la présente invention ne se limite pas aux détails donnés ci-dessus et permet des modes de réalisation sous de nombreuses autres formes spécifiques sans s'éloigner du domaine d'application de l'invention. Par conséquent, les présents modes de réalisation doivent être considérés à titre d'illustration, et peuvent être modifiés sans toutefois sortir de la portée définie par les revendications.

## Revendications

1. Dispositif de changement de vitesse (20) pour engin de mobilité (1) comportant :
- un arbre de sélection (40) dans lequel sont disposées une navette (41) et une vis sans fin (21),
- un actionneur de changement de vitesse (70) agencé pour déplacer la navette (41) le long de la vis sans fin (21) entre au moins deux positions, et engager un rapport sélectionné,
- au moins deux cliquets (42) disposés au niveau de l'arbre de sélection (40), la navette permettant le soulèvement d'un cliquet pour enclencher le rapport sélectionné, chaque cliquet ayant une première partie (421) insérée dans l'arbre (40) et une deuxième partie (422),
- un système de blocage radiale (44), formé d'une seule pièce, pour maintenir l'ensemble des cliquets (42), en place sur l'arbre de sélection (40),
**caractérisé en ce que** le système de blocage est disposé au niveau de la première partie (421) du cliquet (42).

2. Dispositif de changement de vitesse (20) selon la revendication 1, dans lequel le système de blocage (44) est disposé dans une rainure (45).

3. Dispositif de changement de vitesse (20) selon la revendication 2, dans lequel la rainure (45) est formée dans l'arbre (40) au niveau de de la première partie (421) du cliquet (42).

4. Dispositif de changement de vitesse (20) selon une des revendications 2 à 3, dans lequel la rainure (45) est longitudinale, et parallèle à l'axe de l'arbre, formée dans l'arbre de sélection (40) de façon à former un angle supérieur à 0 degré avec la première partie (421) du cliquet (42).

5. Dispositif de changement de vitesse (20) selon une des revendications 1 à 4, dans lequel le système de blocage (44) est formé d'une partie plane longitudinale (440) à partir de laquelle s'étendent au moins deux languettes (441), chacune des languettes (441) étant positionnées au-dessus d'un cliquet (42).

6. Dispositif de changement de vitesse (20) selon la revendication 5, dans lequel les languettes (441) sont formées à partir d'un premier bord (442), parallèle à l'axe Xb du système de blocage (44), de la partie plane (440) et orientées perpendiculairement par rapport à l'axe Xb du système de blocage (44).

7. Dispositif de changement de vitesse (20) selon un des revendications 5 à 6, dans lequel la partie plane (440) est insérée, via un deuxième bord (443) opposé à celui (442) où sont situées les languettes (441), dans la rainure (45) longitudinale formée dans l'arbre de sélection (40).

8. Engin de mobilité (1), notamment engin de mobilité à assistance électrique, comportant un dispositif de changement de vitesse (20) selon l'une quelconque des revendications précédentes.

9. Engin de mobilité selon la revendication 9, dans lequel l'engin (1) est un vélo à assistance électrique.
